# FASCICULE DE BREVET EUROPEEN

(11) **EP 3 735 518 B1**
(45) Date de publication et mention de la délivrance du brevet: **29.12.2021**
(21) Numéro de dépôt: 19710756.8
(22) Date de dépôt: 18.02.2019
(51) Int. Cl.: F01D 9/06, F02C 7/14, F02C 7/18

(54) **TURBOMACHINE COMPORTANT UN ÉCHANGEUR DE CHALEUR DANS LA VEINE SECONDAIRE**
TURBINENTRIEBWERK MIT WÄRMETAUSCHER IM BYPASSKANAL
TURBINE ENGINE COMPRISING A HEAT EXCHANGER IN THE BYPASS FLOWPATH

(30) Priorité: 23.02.2018 FR 1851624
(43) Date de publication de la demande: 11.11.2020
(73) Titulaire: SAFRAN AIRCRAFT ENGINES, 75015 Paris (FR)
(72) Inventeur: PIKOVSKY, Catherine, 77550 MOISSY-CRAMAYEL (FR); PERDRIGEON, Christophe, Marcel, Lucien, 77550 MOISSY-CRAMAYEL (FR); ZACCARDI, Cédric, 77550 MOISSY-CRAMAYEL (FR)
(74) Mandataire: Brevalex
(86) Numéro de dépôt international: PCT/FR2019/050358
(87) Numéro de publication internationale: WO 2019/162601

(56) Documents cités:
- WO-A1-02/38938
- WO-A2-2014/130103
- GB-A- 1 244 340
- US-A- 4 645 415

## Description

### DOMAINE TECHNIQUE

L'invention concerne une turbomachine, telle qu'une turbomachine d'aéronef comportant des moyens de refroidissement d'un composant situé à proximité d'un axe principal de la turbomachine.

L'invention concerne plus particulièrement une turbomachine comportant des moyens de refroidissement d'un arbre rotatif basse pression et/ou de chambres de pressurisation d'huile de lubrification.

### ÉTAT DE LA TECHNIQUE ANTÉRIEURE

Dans les turbomachines actuelles, il y a de nombreux circuits d'air interne moteur. Ces circuits assurent différentes fonctions.

Parmi ces circuits, un circuit d'air réalise à la fois la fonction de pressurisation d'enceintes d'huile de lubrification pour éviter que l'huile ne sorte de ces enceintes et la fonction de refroidissement de l'arbre basse pression.

L'air de ce circuit est prélevé au niveau de la veine primaire, en aval du compresseur basse pression, de préférence entre le compresseur basse pression et le compresseur haute pression.

Cet air est ensuite évacué par les déshuileurs, pour l'air passant par les enceintes et à l'aval de la turbine basse pression pour le reste.

Ce circuit va subir des pertes de charges dues aux changements de rayons, trous, joints, etc. Il faut donc que le rapport de pression (pression prélevée / pression sortante) soit assez grand pour que l'air circule correctement et avec le débit souhaité.

Parmi les contraintes sur ce circuit d'air, il faut que la température de l'air soit assez froide pour refroidir l'arbre basse pression et pour ne pas trop réchauffer l'huile des enceintes. La pression de l'air doit être suffisante pour que le rapport de pression mentionné précédemment soit assez important et permette de faire circuler le débit spécifié.

Aussi, dans certaines turbomachines, le cycle thermodynamique est tel que le rapport de pressions est trop faible pour que ce circuit respecte ces fonctions. Il faut donc trouver une solution de contournement.

Le document EP-0.743.435 décrit une turbomachine comportant un échangeur de chaleur intégré à une aube de redresseur situé dans la veine secondaire. Selon ce document, l'aube comporte une cavité débouchant à chaque extrémité radiale de l'aube pour l'entrée ou la sortie du flux d'air à refroidir.

Un tel échangeur de chaleur est ainsi adapté pour un circuit d'air alimentant un composant situé par exemple dans la virole externe de la turbomachine, mais elle n'est pas adaptée à la ventilation de composants situés à proximité de l'axe principal de la turbomachine.

Dans les documents US 4 645 415 A, GB 1 244 340 A, WO 2014/130103 A2 et WO 02/38938 A1, d'autres turbomachines avec échangeurs de chaleur sont décrites.

L'invention a pour but de proposer une turbomachine comportant des moyens permettant de refroidir efficacement le flux d'air pressurisé qui a été prélevé en aval du compresseur basse pression, tout en produisant de faibles pertes de charge.

### EXPOSÉ DE L'INVENTION

L'invention concerne une turbomachine d'aéronef selon la revendication 1, comportant une veine primaire d'écoulement d'air dans laquelle sont aménagés un compresseur basse pression et un compresseur haute pression,
une veine secondaire d'écoulement d'air qui est située autour de la veine primaire et coaxialement à la veine primaire, comportant un redresseur du flux d'air s'écoulant dans la veine secondaire, comportant une pluralité d'aubes réparties autour d'un axe principal A de la turbomachine,
un circuit d'air pressurisé prélevant de l'air entre le compresseur basse pression et le compresseur haute pression ou dans le compresseur haute pression pour produire un flux d'air pressurisé qui alimente au moins un composant de la turbomachine, ledit au moins un composant étant situé radialement dans la turbomachine à proximité d'un axe principal A de la turbomachine par rapport à la veine primaire,
dans laquelle le circuit d'air pressurisé comporte un échangeur de chaleur entre le flux d'air pressurisé et le flux d'air s'écoulant dans la veine secondaire, qui est agencé dans au moins une aube du redresseur,
l'échangeur de chaleur comportant une conduite agencée dans ladite au moins une aube, qui comporte une entrée d'air pressurisé et une sortie d'air pressurisé qui sont situées à une même extrémité radiale de ladite aube.

L'utilisation d'une conduite disposée dans au moins une aube de redresseur permet de ne produire aucune perte de charge dans la veine secondaire.

L'entrée d'air pressurisé et la sortie d'air pressurisé de la conduite sont situées au niveau d'une extrémité radiale interne de ladite aube.

De préférence, le volume intérieur de ladite aube est isolé du flux d'air s'écoulant dans la veine secondaire.

La turbomachine comporte un circuit de lubrification dans lequel un fluide de lubrification circule, comportant un tronçon agencé dans ladite aube.

De préférence, ledit tronçon comporte une entrée de fluide de lubrification et une sortie de fluide de lubrification qui sont situées au niveau de la même extrémité radiale de ladite aube que l'entrée d'air pressurisé et la sortie d'air pressurisé de la conduite.

De préférence, la turbomachine comporte un compartiment inter-veine situé entre la veine primaire et la veine secondaire, et le circuit d'air pressurisé comporte, dans le sens d'écoulement d'air dans celui-ci :
- au moins un point de prélèvement d'air qui est porté par une paroi radialement interne du compartiment inter-veine ;
- un tronçon amont s'étendant au travers du compartiment inter-veine jusqu'à la veine secondaire ;
- ladite conduite disposée dans ladite aube ;
- un tronçon aval s'étendant au travers du compartiment inter-veine depuis la veine secondaire jusqu'à la veine primaire et s'étendant au travers d'un bras profilé traversant la veine primaire ;
- des moyens de répartition de l'air pressurisé vers ledit au moins un composant de la turbomachine.

De préférence, ledit au moins un composant de la turbomachine est un arbre basse pression de la turbomachine.

De préférence, ledit au moins composant est une enceinte de pressurisation d'huile de lubrification.

De préférence, ledit au moins un composant est un réducteur de vitesse qui est agencé entre l'arbre basse pression et une soufflante de la turbomachine.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en section axiale d'une turbomachine d'aéronef comportant un circuit d'air pressurisé réalisé selon l'invention ;
- la figure 2 est un détail à plus grande échelle d'un tronçon de la conduite utilisée pour réaliser l'échange thermique.

### EXPOSÉ DÉTAILLÉ DE MODES DE RÉALISATION PARTICULIERS

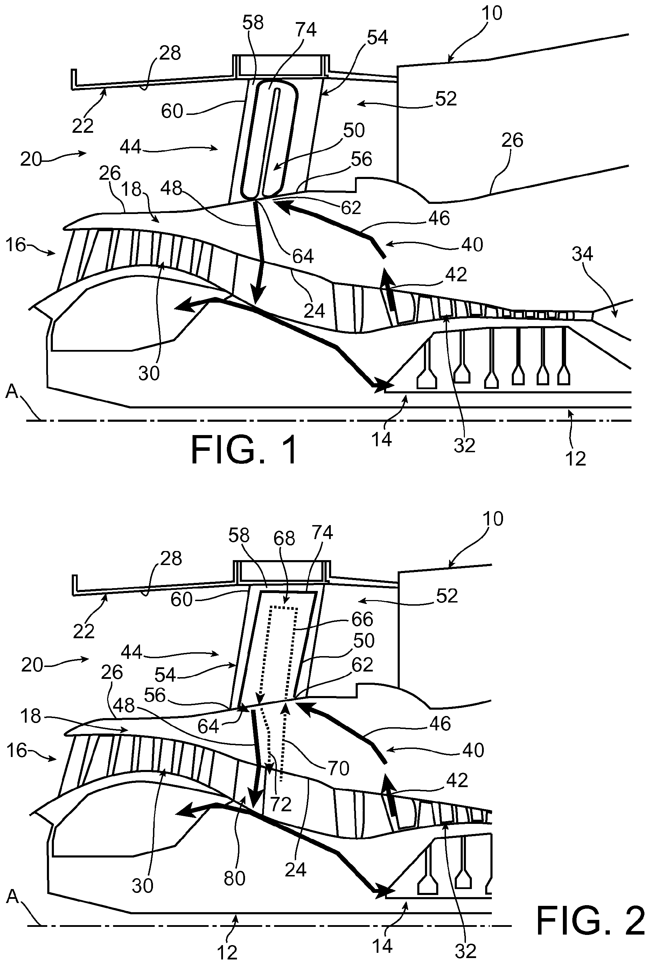

On a représenté à la figure 1 une turbomachine 10 d'aéronef.

La turbomachine 10 comporte, en s'éloignant de son axe principal A, un arbre basse pression 12, un arbre haute pression 14, une veine primaire 16 d'écoulement d'air, une veine secondaire 20 d'écoulement d'air, un compartiment inter-veine 18 séparant la veine primaire 16 et la veine secondaire 20 et une virole 22 de carter intermédiaire.

Le compartiment inter-veine 18, aussi appelé "core compartiment", est délimité radialement par une paroi radialement interne 24 délimitant l'extérieur de la veine primaire 16 et une paroi radialement externe 26 délimitant l'intérieur de la veine secondaire 20. La virole 22 comporte une paroi radialement interne 28 délimitant l'extérieur de la veine secondaire 20.

La veine primaire 16 comporte, d'amont en aval, selon le sens d'écoulement d'air dans celle-ci, c'est-à-dire ici de gauche à droite en se reportant à la figure 1, un compresseur basse pression 30, un compresseur haute pression 32, une chambre de combustion 34, une turbine haute pression et une turbine basse pression (non représentées).

La veine secondaire 20 comporte un redresseur 52 qui a pour but de rediriger le flux d'air s'écoulant dans la veine secondaire 20, afin que celui-ci ait un écoulement orienté axialement.

Le redresseur 52 comporte une pluralité d'aubes 54 réparties régulièrement autour de l'axe principal A de la turbomachine 10 qui agissent sur le flux d'air circulant dans la veine secondaire 20 pour rediriger le flux d'air dans l'axe principal de la turbomachine 10.

Chaque aube 54 s'étend principalement radialement par rapport à l'axe principal A et comporte une extrémité radiale de pied 56 radialement interne pour sa liaison avec le compartiment inter-veine 18 et une extrémité radiale de tête 58 radialement externe pour sa liaison avec la virole 22.

La turbomachine 10 comporte en outre des circuits d'air (non représentés) qui sont répartis à l'intérieur de celle-ci pour refroidir plusieurs composants de la turbomachine.

Parmi ces circuits, et comme on peut le voir à la figure 1, la turbomachine 10 comporte un circuit d'air pressurisé 40 qui est conçu pour à la fois refroidir l'arbre basse pression 12 et alimenter en air pressurisé des enceintes contenant de l'huile de lubrification de parties mobiles, qui sont situées au niveau de l'arbre basse pression et qui permettent de pressuriser cette huile de lubrification.

Cet air pressurisé peut aussi alimenter un réducteur de vitesse (non représenté) qui est agencé entre l'arbre basse pression 12 et la soufflante de la turbomachine.

Le réducteur de vitesse permet de dissocier la vitesse de rotation de la soufflante avec celle de l'arbre basse pression 12 par lequel la soufflante est entraînée. Cela permet notamment de réduire la vitesse de rotation des pales de la soufflante par rapport à celle des compresseurs basse pression, et ainsi d'optimiser leurs efficacités respectives et donc d'améliorer le rendement de propulsion. Un tel réducteur est particulièrement avantageux dans le cas d'un turboréacteur à fort taux de dilution, c'est-à-dire pour lequel le rapport entre la quantité de flux d'air s'écoulant dans la veine secondaire.

Un taux de dilution élevé permet de réduire la consommation du moteur, mais conduit à des dimensions de soufflante élevées. La vitesse de rotation de la soufflante est alors limitée, et restreint d'autant celle du compresseur basse pression et de la turbine basse pression.

Ce circuit d'air pressurisé 40 comporte au moins un point de prélèvement d'air 42 qui est situé sur la paroi radialement interne 24 du compartiment inter-veine 18. Ce point de prélèvement 42 est situé entre le compresseur basse pression 30 et le compresseur haute pression 32 ou bien dans le compresseur haute pression 32.

Dans ce dernier cas, le point de prélèvement est situé au niveau de l'un des étages du compresseur haute pression 32 qui est déterminé en fonction de la pression de l'air pressurisé, sa température et de la possibilité de réaliser un prélèvement sur les premiers étages du compresseurs haute pression 32 malgré la présence d'aubes à calage variables (communément désignées VSV pour Variable Stator Vanes).

L'air prélevé est à une pression suffisamment importante pour pressuriser les enceintes d'huile. Par contre, la température de cet air est trop élevée pour permettre le refroidissement de l'arbre basse pression 12 et aussi pour avoir de bonnes conditions de fonctionnement du circuit de lubrification.

Le circuit d'air pressurisé 40 comporte à cet effet un échangeur de chaleur 44 permettant de réduire la température de l'air pressurisé.

Cet échangeur de chaleur 44 est du type air-air et la source d'air froid est constituée par l'air circulant dans la veine secondaire 20.

L'échangeur de chaleur 44 est ainsi situé au niveau de la veine secondaire 20, comme on le décrira par la suite.

Le circuit d'air pressurisé 40 comporte, dans le sens d'écoulement d'air dans celui-ci, un tronçon amont 46 qui s'étend depuis le point de prélèvement d'air 42 jusqu'à l'échangeur de chaleur 44, l'échangeur de chaleur 44, un tronçon aval 48 qui s'étend depuis l'échangeur de chaleur 44 jusqu'à l'arbre basse pression 12 et des moyens (non représentés) de répartition de l'air pressurisé en direction des points de refroidissement de l'arbre basse pression 12 et des enceintes de pressurisation d'huile.

Ainsi, le tronçon amont 46 du circuit d'air pressurisé 40 s'étend au travers du compartiment inter-veine 18, depuis sa paroi radialement interne 24 au niveau de laquelle le tronçon amont 46 est relié au point de prélèvement d'air 42, jusqu'à la paroi radialement externe 26 du compartiment inter-veine 18, au niveau de laquelle il est relié à l'échangeur de chaleur 44.

Aussi le tronçon aval 48 du circuit d'air pressurisé s'étend au travers du compartiment inter-veine 18, à partir de sa paroi radialement externe au niveau de laquelle il est relié à l'échangeur de chaleur 44 et il traverse aussi la veine primaire 16 dans des bras profilés 80 placés entre le compresseur basse pression 30 et haute pression 32, avantageusement.

Comme on l'a dit plus haut, la source d'air froid de l'échangeur de chaleur 44 est constituée de l'air circulant dans la veine secondaire 20.

Pour réaliser l'échange de chaleur entre l'air pressurisé et l'air frais circulant dans la veine secondaire 20, l'échangeur de chaleur 44 comporte une conduite 50 qui est agencée à l'intérieur d'au moins une aube 54 du redresseur 52.

La conduite 50 comporte une entrée d'air pressurisé 62 par laquelle la conduite est reliée au tronçon amont 46 et une sortie d'air pressurisé 64 par laquelle la conduite 50 est reliée au tronçon aval 48.

Dans la description qui va suivre, on fera référence à une aube 54 dans laquelle une conduite 50 est agencée. Il sera compris que l'invention n'est pas limitée à ce mode de réalisation et que plusieurs aubes 54 peuvent comporter chacune une conduite 50 de l'échangeur de chaleur 44.

En plus de sa fonction initiale de redresser le flux d'air circulant dans la veine secondaire 20, l'aube 54 est conçue pour réaliser la fonction d'échange de chaleur entre le flux d'air pressurisé circulant dans la conduite 50 et le flux d'air circulant dans la veine secondaire 20.

Ainsi, la conduite 50 est en contact thermique avec une paroi interne de l'aube 54. La paroi externe 60 de l'aube est définie indépendamment de la fonction d'échange thermique.

Le matériau constitutif de l'aube 54 est choisi pour favoriser les échanges de chaleur. Ce matériau est par exemple un alliage d'aluminium ou bien un alliage de titane dans le cas où l'aube 54 serait un élément structurel de la turbomachine. Il sera compris que l'invention n'est pas limitée à ces matériaux et que l'aube 54 peut être réalisée dans tout autre matériau ayant des propriétés de dissipation thermique convenables.

La forme de la paroi externe 60 de l'aube 54 est identique à celle des autres aubes 54 n'ayant pas la fonction d'échange de chaleur, l'échangeur de chaleur 44 n'a donc aucun impact sur l'écoulement d'air dans la veine secondaire 20.

La conduite 50 est conformée pour se connecter au tronçon amont 46 et au tronçon aval 48, c'est-à-dire que son entrée d'air pressurisé 62, par laquelle la conduite 50 est reliée au tronçon amont 46, et la sortie d'air pressurisé 64, par laquelle la conduite 50 est reliée au tronçon aval 48, sont située au niveau d'une même extrémité radiale de l'aube 54, qui est ici l'extrémité radiale interne de pied 56 de l'aube.

Le reste de la conduite 50 s'étend à l'intérieur de l'aube 54. Selon un premier mode de réalisation, la conduite 50 forme un U inversé, c'est-à-dire qu'elle comporte un coude 74 situé au niveau de l'extrémité radiale externe de tête 58 de l'aube 54.

A titre de variante, la conduite comporte plusieurs coudes 74 répartis dans l'aube 54, ce qui permet d'augmenter la longueur de la conduite 50 dans l'aube 54 afin d'améliorer les échanges thermiques.

Comme on peut le voir à la figure 2, l'aube 54 reçoit aussi un tronçon 66 d'un circuit de lubrification 68 dans lequel un fluide tel qu'un fluide de lubrification, tel que de l'huile circule.

Ce tronçon 66 coopère avec l'aube 54 pour réaliser un refroidissement du fluide de lubrification, de manière similaire au refroidissement de l'air pressurisé.

Le tronçon 66 du circuit de lubrification 68 comporte une entrée de fluide de lubrification 70 et une sortie de fluide de lubrification 72, qui sont raccordées au reste du circuit de lubrification 68.

De préférence, l'entrée de fluide de lubrification 70 et la sortie de fluide de lubrification 72 sont elles aussi situées au niveau de l'extrémité radiale interne de pied 56 de l'aube 54. Ainsi, seule cette extrémité radiale interne de pied 56 de l'aube 54 comporte des moyens pour le raccordement des différentes entrées et sorties de la conduite et du tronçon 66, ce qui simplifie sa structure.

Cette variante de réalisation permet d'utiliser le maximum d'aubes fixes pour former des échangeurs de chaleur.

Quel que soit le mode de réalisation, l'aube 54 est réalisée de manière que sa paroi externe 60 ne comporte aucun orifice de prélèvement d'une partie du flux d'air circulant dans la veine secondaire 20. Ainsi, le volume interne de l'aube 54 est isolé du flux d'air s'écoulant dans la veine secondaire 20.

Aussi, elle est réalisée pour favoriser les échanges de chaleur entre le flux d'air circulant dans la veine secondaire 20 et l'air pressurisé circulant dans la conduite 50, et le cas échéant avec aussi le fluide de lubrification.

Selon un mode de réalisation non limitatif, l'aube 54 est réalisée par la technique dite de fabrication additive. Dans ce cas, la conduite 50 et le tronçon 66, si applicable, sont fabriqués simultanément.

Selon un autre mode de réalisation, l'aube 54 est réalisée par forgeage d'une plaque ou d'un barreau. L'aube peut aussi être réalisée par usinage, dans quel cas une cavité est aménagée dans l'aube, pour former la conduite 50 ou le tronçon 66 et cette cavité est refermée par une plaque collée, soudée ou brasée.

## Revendications

1. Turbomachine (10) d'aéronef comportant une veine primaire (16) d'écoulement d'air dans laquelle sont aménagés un compresseur basse pression (30) et un compresseur haute pression (32),
une veine secondaire (20) d'écoulement d'air qui est située autour de la veine primaire (16) et coaxialement à la veine primaire (16), comportant un redresseur (52) du flux d'air s'écoulant dans la veine secondaire, comportant une pluralité d'aubes réparties autour d'un axe principal (A) de la turbomachine (10),
un circuit d'air pressurisé (40) prélevant de l'air entre le compresseur basse pression (30) et le compresseur haute pression (32) ou dans le compresseur haute pression pour produire un flux d'air pressurisé qui alimente au moins un composant (12) de la turbomachine (10), ledit au moins un composant (12) étant situé radialement dans la turbomachine (10) à proximité d'un axe principal (A) de la turbomachine par rapport à la veine primaire (16),
dans laquelle le circuit d'air pressurisé (40) comporte un échangeur de chaleur (44) entre le flux d'air pressurisé et le flux d'air s'écoulant dans la veine secondaire (20), qui est agencé dans au moins une aube (54) du redresseur,
dans laquelle l'échangeur de chaleur comporte une conduite agencée dans ladite au moins une aube (54), qui comporte une entrée d'air pressurisé (62) et une sortie d'air pressurisé (64) qui sont situées à une même extrémité radiale (56) de ladite aube (54),
**caractérisée en ce qu'**elle comporte un circuit de lubrification (68) dans lequel un fluide de lubrification circule, comportant un tronçon (66) agencé dans ladite aube (54).

2. Turbomachine (10) selon la revendication 1, **caractérisée en ce que** l'entrée d'air pressurisé (62) et la sortie d'air pressurisé (64) de la conduite sont situées au niveau d'une extrémité radiale interne (56) de ladite aube (54).

3. Turbomachine (10) selon l'une quelconque des revendications précédentes, **caractérisée en ce que** le volume intérieur de ladite aube (54) est isolé du flux d'air s'écoulant dans la veine secondaire (20).

4. Turbomachine (10) selon la revendication précédente, **caractérisée en ce que** ledit tronçon (66) comporte une entrée de fluide de lubrification (70) et une sortie de fluide de lubrification (72) qui sont situées au niveau de la même extrémité radiale (56) de ladite aube (54) que l'entrée d'air pressurisé (62) et la sortie d'air pressurisé (64) de la conduite (50).

5. Turbomachine (10) selon l'une quelconque des revendications précédentes, qui comporte un compartiment inter-veine (18) situé entre la veine primaire (16) et la veine secondaire (20), **caractérisée en ce que**
le circuit d'air pressurisé (40) comporte, dans le sens d'écoulement d'air dans celui-ci :
- au moins un point de prélèvement d'air (42) qui est porté par une paroi radialement interne (24) du compartiment inter-veine (18) ;
- un tronçon amont (46) s'étendant au travers du compartiment inter-veine (18) jusqu'à la veine secondaire (20) ;
- ladite conduite (50) disposée dans ladite aube (54) ;
- un tronçon aval (48) s'étendant au travers du compartiment inter-veine (18) depuis la veine secondaire (20) jusqu'à la veine primaire (16) et s'étendant au travers d'un bras profilé (80) traversant la veine primaire (16) ;
- des moyens de répartition de l'air pressurisé vers ledit au moins un composant (12) de la turbomachine (10).

6. Turbomachine (10) selon l'une quelconque des revendications précédentes, **caractérisée en ce que** ledit au moins un composant de la turbomachine est un arbre basse pression (12) de la turbomachine (10).

7. Turbomachine (10) selon l'une quelconque des revendications précédentes, **caractérisée en ce que** ledit au moins composant est une enceinte de pressurisation d'huile de lubrification.

8. Turbomachine (10) selon l'une quelconque des revendications précédentes, **caractérisée en ce que** ledit au moins un composant est un réducteur de vitesse qui est agencé entre l'arbre basse pression (12) et une soufflante de la turbomachine (10).

## Patentansprüche

1. Turbinentriebwerk (10) eines Flugzeugs mit einem Luftstrom-Hauptkanal (16), in dem ein Niederdruckkompressor (30) und ein Hochdruckkompressor (32) angeordnet sind,
einem Luftstrom-Bypasskanal (20), der sich um den Hauptkanal (16) herum und koaxial zu dem Hauptkanal (16) befindet, mit einem Gleichrichter (52) des in dem Bypasskanal strömenden Luftstroms, mit einer Mehrzahl von um eine Hauptachse (A) des Turbinentriebwerks (10) verteilten Schaufeln,
einem Druckluftkreislauf (40), der zwischen dem Niederdruckkompressor (30) und dem Hochdruckkompressor (32) oder im Hochdruckkompressor Luft abzieht, um einen Druckluftstrom zu erzeugen, der mindestens einen Bestandteil (12) des Turbinentriebwerks (10) versorgt, wobei sich der mindestens eine Bestandteil (12) radial in dem Turbinentriebwerk (10) in der Nähe einer Hauptachse (A) des Turbinentriebwerks bezüglich des Hauptkanals (16) befindet,
wobei der Druckluftkreislauf (40) einen Wärmetauscher (44) zwischen dem Druckluftstrom und dem in dem Bypasskanal (20) strömenden Luftstrom aufweist, welcher in mindestens einer Schaufel (54) des Gleichrichters angeordnet ist,
wobei der Wärmetauscher eine in der mindestens einen Schaufel (54) angeordnete Leitung aufweist, welche einen Drucklufteinlass (62) und einen Druckluftauslass (64) aufweist, die sich an demselben radialen Ende (56) der Schaufel (54) befinden,
**dadurch gekennzeichnet, dass** es einen Schmierkreislauf (68), in welchem eine Schmierflüssigkeit zirkuliert, mit einem in der Schaufel (54) angeordneten Abschnitt (66) aufweist.

2. Turbinentriebwerk (10) nach Anspruch 1, **dadurch gekennzeichnet, dass** sich der Drucklufteinlass (62) und der Druckluftauslass (64) der Leitung auf der Höhe eines inneren radialen Endes (56) der Schaufel (54) befinden.

3. Turbinentriebwerk (10) nach einem der vorhergehenden Ansprüche, **dadurch gekennzeichnet, dass** das Innenvolumen der Schaufel (54) gegenüber dem in dem Bypasskanal (20) strömenden Luftstrom isoliert ist.

4. Turbinentriebwerk (10) nach dem vorhergehenden Anspruch, **dadurch gekennzeichnet, dass** der Abschnitt (66) einen Schmierflüssigkeitseinlass (70) und einen Schmierflüssigkeitsauslass (72) aufweist, welche sich auf Höhe desselben radialen Endes (56) der Schaufel (54) befinden wie der Drucklufteinlass (62) und der Druckluftauslass (64) der Leitung (50).

5. Turbinentriebwerk (10) nach einem der vorhergehenden Ansprüche, welches eine Zwischenkanalkammer (18) aufweist, die sich zwischen dem Hauptkanal (16) und dem Bypasskanal (20) befindet, **dadurch gekennzeichnet, dass**
der Druckluftkreislauf (40) in der Richtung der Luftströmung Folgendes in diesem aufweist:
- mindestens eine Luftabzugsstelle (42), die durch eine radial innere Wand (24) der Zwischenkanalkammer (18) getragen wird;
- einen stromaufwärts gelegenen Abschnitt (46), der sich durch die Zwischenkanalkammer (18) bis zu dem Bypasskanal (20) erstreckt;
- die in der Schaufel (54) angeordnete Leitung (50);
- einen stromabwärts gelegenen Abschnitt (48), der sich durch die Zwischenkanalkammer (18) von dem Bypasskanal (20) zu dem Hauptkanal (16) erstreckt und sich durch einen den Hauptkanal (16) durchquerenden Profilarm (80) erstreckt;
- Mittel zur Verteilung der Druckluft in Richtung des mindestens einen Bestandteils (12) des Turbinentriebwerks (10).

6. Turbinentriebwerk (10) nach einem der vorhergehenden Ansprüche, **dadurch gekennzeichnet, dass** der mindestens eine Bestandteil des Turbinentriebwerks eine Niederdruckwelle (12) des Turbinentriebwerks (10) ist.

7. Turbinentriebwerk (10) nach einem der vorhergehenden Ansprüche, **dadurch gekennzeichnet, dass** der mindestens eine Bestandteil ein Behälter zur Druckbeaufschlagung von Schmieröl ist.

8. Turbinentriebwerk (10) nach einem der vorhergehenden Ansprüche, **dadurch gekennzeichnet, dass** der mindestens eine Bestandteil ein Untersetzungsgetriebe ist, das zwischen der Niederdruckwelle (12) und einem Gebläse des Turbinentriebwerks (10) angeordnet ist.

## Claims

1. Aircraft turbine engine (10) including a primary air flow path (16) wherein a low-pressure compressor (30) and a high-pressure compressor (32) are arranged,
a secondary air flow path (20) which is located around the primary path (16) and coaxially with the primary path (16), including a straightener (52) of the air stream flowing in the secondary path, including a plurality of vanes distributed around a main axis (A) of the turbine engine (10),
a pressurized air circuit (40) extracting air between the low-pressure compressor (30) and the high-pressure compressor (32) or in the high-pressure compressor to produce a pressurized air stream supplying at least one component (12) of the turbine engine (10), said at least one component (12) being located radially in the turbine engine (10) in the vicinity of a main axis (A) of the turbine engine with respect to the primary path (16),
wherein the pressurized air circuit (40) includes a heat exchanger (44) between the pressurized air stream and the air stream flowing in the secondary path (20), which is arranged in at least one vane (54) of the straightener,
wherein the heat exchanger includes a duct arranged in said at least one vane (54), which includes a pressurized air inlet (62) and a pressurized air outlet (64) which are located at the same radial end (56) of said vane (54),
**characterized in that** it includes a lubrication circuit (68) wherein a lubrication fluid circulates, including a section (66) arranged in said vane (54).

2. Turbine engine (10) according to claim 1, **characterized in that** the pressurized air inlet (62) and the pressurized air outlet (64) of the duct are located at the level of an inner radial end (56) of said vane (54).

3. Turbine engine (10) according to any one of the preceding claims, **characterized in that** the internal volume of said vane (54) is isolated from the air flow flowing in the secondary path (20).

4. Turbine engine (10) according to the preceding claim, **characterized in that** said section (66) includes a lubrication fluid inlet (70) and a lubrication fluid outlet (72) which are located at the level of the same radial end (56) of said vane (54) as the pressurized air inlet (62) and the pressurized air outlet (64) of the duct (50).

5. Turbine engine (10) according to any one of the preceding claims, which includes an inter-path compartment (18) located between the primary path (16) and the secondary path (20), **characterized in that**
the pressurized air circuit (40) includes, in the direction of air flow therein:
- at least one air extraction point (42) which is borne by a radially inner wall (24) of the inter-path compartment (18);
- an upstream section (46) extending through the inter-path compartment (18) to the secondary path (20);
- said duct (50) disposed in said vane (54);
- a downstream section (48) extending through the inter-path compartment (18) from the secondary path (20) to the primary path (16) and extending through a profiled arm (80) traversing the primary path (16);
- means for distributing the pressurized air to said at least one component (12) of the turbine engine (10).

6. Turbine engine (10) according to any one of the preceding claims, **characterized in that** said at least one component of the turbine engine is a low-pressure shaft (12) of the turbine engine (10).

7. Turbine engine (10) according to any one of the preceding claims, **characterized in that** said at least one component is a lubrication oil pressurization enclosure.

8. Turbine engine (10) according to any one of the preceding claims, **characterized in that** said at least one component is a reduction gear which is arranged between the low-pressure shaft (12) and a fan of the turbine engine (10).
